# EUROPÄISCHE PATENTANMELDUNG

(11) **EP 3 479 682 A1**
(43) Veröffentlichungstag der Anmeldung: **08.05.2019**
(21) Anmeldenummer: 17199714.1
(22) Anmeldetag: 02.11.2017
(51) Int. Cl.: A01G 25/09, A01G 25/16, A01D 34/00

(54) **SELBSTFAHRENDE BEWÄSSERUNGSVORRICHTUNG UND VERFAHREN ZUM AUTONOMEN BEWÄSSERN EINES BODENAREALS**

(71) Anmelder: Maurer, Andreas, 72072 Tübingen (DE)
(72) Erfinder: Maurer, Andreas, 72072 Tübingen (DE)
(74) Vertreter: Graf von Stosch, Andreas

(57) **Zusammenfassung**

Die vorliegende Erfindung betrifft eine selbstfahrende Bewässerungsvorrichtung (1) zum autonomen Bewässern eines Bodenareals (40), umfassend ein Mehrzahl von Rädern (3, 4), eine Antriebseinheit zum Antreiben zumindest eines der Räder (3, 4), einen Energiespeicher für die Antriebseinheit, einen Wassertank (8), eine mit dem Wassertank (8) in Fluidkommunikation stehende Pumpe (11), zumindest eine mit der Pumpe (11) verbundene Düse (12) zum Ausgeben von Wasser an die Umgebung und eine Steuerung/Regelung (24) zum Steuern/Regeln der Bewegung der Bewässerungsvorrichtung (1) und/oder der Abgabe des Wassers, wobei ein Lichtsensor zum Erfassen einer Lichtintensität, insbesondere einer Sonneneinstrahlungsintensität, vorgesehen ist, sowie ein entsprechendes Verfahren.

## Beschreibung

### Technisches Gebiet

Die vorliegende Erfindung betrifft eine selbstfahrende Bewässerungsvorrichtung und ein Verfahren zum autonomen Bewässern eines Bodenareals.

### Stand der Technik

Zur Bewässerung von Böden sind verschiedenste Vorrichtungen und Verfahren bekannt. Böden können beispielsweise per Hand bewässert werden, etwa mit Hilfe eines Schlauchs. Die händische Bewässerung ist jedoch Arbeits- und somit sehr kostenintensiv, sowie ineffizient.

Ferner ist es bekannt, ein zu bewässerndes Bodenareal mit einer Bewässerungsanlage zu versehen. Die fachgerechte Planung einer Bewässerungsanlage erfordert Expertenwissen hinsichtlich Hydraulik, Reibungsverlusten in Leitungen, Trinkwasserschutz und der Produktauswahl von Steuerung, Sensoren, Regnern. Zudem ist die Installation einer Bewässerungsanlage, insbesondere bei unterirdischer Verlegung der Rohre äußerst aufwendig. Es werden Rohre eingegraben und Kabel von der Steuerung zu den Magnetventilen und Sensoren verlegt. Die Personalkosten übersteigen in der Regel die Materialkosten um den Faktor 2 bis 3. In Gebieten, in welchen die Temperaturen den Gefrierpunkt unterschreiten, müssen die verlegten Rohre entleert werden, um Frostschäden zu vermeiden. Dies ist insbesondere für unterirdisch verlegte Rohre aufwendig.

Zudem kann eine falsche Positionierung von Regnern und Düsen zu einer ungleichmäßigen Bewässerung führen. Dies kann dazu führen, dass Bereiche des Bodenareals übermäßig oder unzureichend bewässert werden, wodurch diese Bereiche vermoosen oder vertrocknen, sowie die dort angesiedelten Pflanzen Schaden nehmen.

Eine einmal installierte Anlage kann zudem nicht ohne weiteres geändert werden. Die Änderung der Position von Regnern beziehungsweise der Austausch von Regnern erfordern mehr oder minder massive und technisch aufwendige Arbeiten, wie das Ausgraben der betroffenen Teile oder das Umlegen von Leitungen.

Um den vorgenannten Nachteilen Rechnung zu tragen, sind mobile Bewässerungsvorrichtungen bekannt, welche einen Wassertank und eine Düse aufweisen und selbstständig das zu bewässernde Bodenareal abfahren und dabei bewässern. Eine solche mobile Bewässerungsvorrichtung ist beispielsweise der EP 2 437 589 A1 zu entnehmen. Die darin gezeigte Vorrichtung ermittelt anhand einer Mikrowellenmessung einen Feuchtegehalt des Bodens, auf dessen Basis eine Bewässerungsmenge bestimmt wird. Zwar kann hierdurch auf eine teure stationär verlegte Anlage verzichtet werden. Jedoch wird lediglich auf den aktuellen Feuchtegehalt des Bodens zum Messzeitpunkt abgestellt. Aussagen über die Entwicklung des Feuchtegehalts des Bodens in der Zukunft sowie dessen Evapotranspirationneigung können nicht getroffen werden. Insbesondere in Regionen mit einem ausgeprägten kontinentalen Klima und/oder mit starken Temperarturunterschieden kann es so zu einer Fehlbewässerung kommen, da solche Böden beispielsweise frühmorgens eine relativ hohe Feuchte aufweisen können, jedoch aufgrund hoher Temperatur und starker Sonneneinstrahlungsintensität schnell austrocknen.

### Darstellung der Erfindung

Ausgehend von dem bekannten Stand der Technik ist es eine Aufgabe der vorliegenden Erfindung, eine verbesserte Vorrichtung zum Bewässern eines Bodenareals, sowie ein entsprechendes Verfahren bereitzustellen.

Die Aufgabe wird durch eine selbstfahrende Bewässerungsvorrichtung zum autonomen Bewässern eines Bodenareals mit den Merkmalen des Anspruchs 1 gelöst. Vorteilhafte Weiterbildungen ergeben sich aus den Unteransprüchen, der Beschreibung und den Figuren.

Entsprechend wird eine selbstfahrende Bewässerungsvorrichtung zum autonomen Bewässern eines Bodenareals, insbesondere eines Privatgartens, einer öffentlichen Grünfläche, eines Golfplatzes, einer agrarwirtschaftlich genutzten Fläche oder eines Sportplatzes, vorgeschlagen, umfassend eine Mehrzahl von Rädern, eine Antriebseinheit zum Antreiben zumindest eines der Räder, einen Energiespeicher für die Antriebseinheit, einen Wassertank, eine mit dem Wassertank in Fluidkommunikation stehende Pumpe, zumindest eine mit der Pumpe verbundene Düse zum Ausgeben von Wasser an die Umgebung und eine Steuerung/Regelung zum Steuern/Regeln der Bewegung der Bewässerungsvorrichtung und/oder der Abgabe des Wassers. Erfindungsgemäß ist ein Lichtsensor zum Erfassen einer Lichtintensität, insbesondere einer Sonneneinstrahlungsintensität, vorgesehen.

Dadurch, dass ein Lichtsensor zum Erfassen der Lichtintensität, insbesondere der Sonneneinstrahlungsintensität, vorgesehen ist, kann die im Bereich der selbstfahrenden Bewässerungsvorrichtung eintreffende Lichtintensität erfasst werden. Die Lichtintensität, insbesondere die Sonneneinstrahlungsintensität, ist dabei ein Maß für die via Verdunstung beziehungsweise Evapotranspiration verloren gegangene beziehungsweise gehende Wassermenge, welche den sich im Bodenareal befindlichen Boden beziehungsweise Pflanzen nachgeführt werden muss. Die Lichtintensität kann dabei bei sich bewegender selbstfahrender Bewässerungsvorrichtung sukzessive im Wesentlichen an jedem Ort beziehungsweise in jedem Abschnitt des Bodenareals erfasst werden. In Kombination mit weiteren Daten von Klimasensoren (Temperatur, Windgeschwindigkeit, Bodenfeuchtigkeit, Luftfeuchtigkeit), die entweder an dem Gerät selbst angebracht sind oder in der umliegenden Umgebung ortsfest montiert sind, lässt sich die Evapotranspiration noch genauer berechnen. Mithin lässt sich für jeden Ort beziehungsweise Abschnitt des Bodenareals ein Ausmaß an Evapotranspiration und zukünftig beziehungsweise über den Tag oder das Bewässerungsintervall zu erwartende Evapotranspiration bestimmen. Anhand der dadurch erhaltenen Daten ist es möglich, den Bewässerungsbedarf unter Einbeziehung der basierend auf der Lichtintensität zu erwartenden Verdunstung zu ermitteln. Folglich kann die abzugebende Wassermenge im Vergleich zu herkömmlichen Vorrichtungen und Verfahren genauer bestimmt werden.

Bevorzugt ist die Antriebseinheit in Form eines Elektromotors und die Speichereinheit entsprechend als bevorzugt wiederaufladbare Batterie bereitgestellt. Alternativ kann die Antriebseinheit auch in anderer Form, beispielsweise als Verbrennungsmotor ausgebildet sein und die Speichereinheit ein entsprechendes Verbrennungsmedium, bevorzugt Benzin beziehungsweise ein Benzingemisch, aufweisen.

In einer weiteren bevorzugten Ausführungsform ist die Steuerung/Regelung dazu eingerichtet, eine abzugebende Wassermenge anhand der mittels des Lichtsensors erfassten Lichtintensität zu bestimmen. Die Steuerung/Regelung erfasst dabei die durch den Lichtsensor erfassten Werte und ordnet sie einer jeweiligen Position, mithin dem Ort beziehungsweise Abschnitt des Bodenareals, in welchem sich die selbstfahrende Bewässerungsvorrichtung zum Zeitpunkt des Erfassens des jeweiligen Messwertes befindet, zu. Die erfassten Messwerte können als Maß für die Evapotranspiration verwendet werden. Folglich kann durch die Ermittlung der Lichtintensität auf den Wasserbedarf des jeweiligen Ortes beziehungsweise Abschnitts geschlossen werden. Mithin kann auf einfache Weise der konkrete Wasserbedarf für das gesamte Bodenareal ortsgenau und bedarfsgerecht ermittelt werden. Ein Überbewässern oder ein Austrocknung von Abschnitten des Bodenareals aufgrund von unzureichender Bewässerung kann somit vermindert oder gar gänzlich vermieden werden.

Bevorzugt ist die Steuerung/Regelung ferner dazu eingerichtet, die erfassten Lichtintensitätswerte und/oder den lokal vorliegenden Wasserbedarf jedes Ortes beziehungsweise Abschnitts des Bodenareals digital zu kartieren und/oder zu speichern.

Wenn die Steuerung/Regelung ferner dazu eingerichtet ist, sich an im und/oder um das Bodenareal verlegten magnetischen Bändern und/oder Leiterkabeln zu orientieren, kann eine besonders einfache Navigation der selbstfahrenden Bewässerungsvorrichtung bereitgestellt werden. Alternativ kann die Orientierung beziehungsweise Navigation auch über andere an sich bekannte Arten erfolgen, insbesondere via NFC, LORA, NB-Funk, Bluetooth, WLAN, GPS und/oder basierend auf optischen Systemen wie Scannern, insbesondere Laserscannern, berührungslosen Abstandssensoren, Tastsensoren und/oder einer Kombination der vorgenannten. Bevorzugt erfolgt das via der Steuerung/Regelung geregelte Abfahren des Bodenareals, indem vorab eine Kontur beziehungsweise ein Umfang des Bodenareals ermittelt wird. Im Anschluss daran kann die selbstfahrende Bewässerungsvorrichtung das Innere des Bodenareals in bevorzugt parallelen Streifen abfahren. Alternativ ist auch eine chaotische Wegführung möglich. Die Steuerung/Regelung steuert bevorzugt die Wasserabgabe derart, dass lediglich noch unbewässerte Bereiche des Bodenareals bewässert werden. Orte beziehungsweise Abschnitte, die bereits bewässert wurden und über welche sich die selbstfahrende Bewässerungsvorrichtung erneut bewegt, werden hingegen nur dann noch zusätzlich bewässert, wenn die Wassergaben aufgrund der Evapotranspiration noch nicht ausreichend war. Sobald die Wasserbilanz ausgeglichen ist, wird nicht mehr zusätzlich bewässert.

Als vorteilhaft hat sich herausgestellt, wenn die Wasserabgabe je nach Bedarf zu- und abgeschaltet werden kann, bevorzugt durch Öffnen und Schließen der zumindest einen Düse und/oder einer mit der zumindest einen Düse verbundenen Zuleitung.

Zum Modulieren der genauen Wasserabgabe kann gemäß einer weiteren bevorzugten Ausführungsform bei gleichbleibender Pumpenleistung die Fahrgeschwindigkeit der selbstfahrenden Bewässerungsvorrichtung angepasst oder alternativ bei konstanter Fahrgeschwindigkeit die Pumpenleistung variiert werden.

Gemäß einer bevorzugten weiteren Ausführungsform ist der Lichtsensor eine Solarzelle. Dadurch lässt sich in besonders einfacher und zuverlässiger Weise die Lichtintensität beziehungsweise Sonneneinstrahlungsintensität erfassen. Die Sonneneinstrahlungsintensität ist hierbei proportional zur durch die Solarzelle erzeugten flächenspezifischen elektrischen Energie beziehungsweise Leistung.

Gemäß einer bevorzugten weiteren Ausführungsform ist zumindest ein weiterer Sensor, bevorzugt ein Temperatursensor, Windgeschwindigkeitssensor, Niederschlagssenor und/oder ein Feuchtesensor zum Erfassen der Luftfeuchte und/oder der Bodenfeuchte, vorgesehen, wobei die Steuerung/Regelung bevorzugt dazu eingerichtet ist, die abzugebende Wassermenge ferner unter Einbeziehung von durch den zumindest einen weiteren Sensor erfassten Messwerten zu bestimmen. Dadurch ist es möglich, die Evapotranspiration noch genauer zu bestimmen und/oder die ermittelte abzugebende Wassermenge basierend auf der Feuchtemessung entsprechend zu korrigieren. Folglich lässt sich der Wasserbedarf für jeden Abschnitt beziehungsweise Ort des Bodenareals besonders genau bestimmen.

Gemäß einer bevorzugten weiteren Ausführungsform ist zumindest eine Düse als Lochrohr und/oder als bewegliche, bevorzugt rotierende Düse ausgebildet und/oder die Sprühweite und/oder Strahlweite zumindest einer Düse ist, bevorzugt durch verändern der Düsenöffnung, einstellbar. Dadurch lässt sich auf einfache Weise ein vergrößerter Bereich durch die selbstfahrende Bewässerungsvorrichtung zeitgleich bewässern. Die selbstfahrende Bewässerungsvorrichtung kann folglich das Bodenareal in weiter auseinanderliegenden Bahnen abfahren, mithin das Bodenareal in kürzerer Zeit bewässern. Ferner können durch die Modulation der Sprühweite oder die Bewegung der Düse Pflanzen, die in der Nähe der selbstfahrenden Bewässerungsvorrichtung stehen, zusätzlich zum eigentlichen Bodenareal gegossen werden. Durch eine gezielte Bewegung der Düse kann die selbstfahrenden Bewässerungsvorrichtung je nach Fahrtrichtung auch an Wänden und/oder Wegen vorbeifahren, ohne dass diese nass werden. Die Düse wird entsprechend derart bewegt, dass sie beim Vorbeifahren an einer Wand von dieser weg weist.

Eine besonders effiziente Bearbeitung des Bodenareals kann erzielt werden, wenn gemäß einer bevorzugten weiteren Ausführungsform die selbstfahrende Bewässerungsvorrichtung ferner eine Mähvorrichtung aufweist. Dadurch ist es möglich, neben der Bewässerung zugleich ein Mähen beziehungsweise Beschneiden der sich im Bodenareal befindlichen Pflanzen, insbesondere der Gräser, zu erzielen. Mit anderen Worten ist dadurch eine Kombination aus Mäher und Irrigator, mithin eine selbstfahrende beziehungsweise autonome Vorrichtung zum Bewässern und Mähen eines Bodenareals, bereitgestellt.

Gemäß einer bevorzugten weiteren Ausführungsform ist zumindest ein Düse in Hauptfahrtrichtung der selbstfahrenden Bewässerungsvorrichtung gesehen hinter der Mähvorrichtung und/oder zumindest eine Düse seitlich der Mähvorrichtung angeordnet. Dadurch kann ermöglicht werden, dass lediglich bereits gemähte Bereiche des Bodenareals gewässert werden, so dass ein Mähen bereits bewässerter, mithin schlechter zu schneidender Pflanzen vermieden werden kann, was ansonsten zu einem schlechten Schnittergebnis führen kann.

Um eine im Wesentlichen autonome Reinigung der Mähvorrichtung zu erzielen und somit die erforderlichen Wartungsintervalle zum Reinigen und/oder Warten der selbstfahrenden Bewässerungsvorrichtung zu vergrößern, kann zumindest eine Düse zum Reinigen der Mähvorrichtung vorgesehen sein, wobei bevorzugt zumindest eine Düse schwenkbar angeordnet ist und bevorzugt zwischen einer Bewässerungsposition und einer Reinigungsposition zum Reinigen der Mähvorrichtung schwenkbar ist. Während des Bewässerns kann die Düse zur Irrigation verwendet werden und, ausgelöst durch die Steuerung/Regelung, umschwenken, um die Mähvorrichtung zu besprühen und sie von anhaftenden und/oder agglomerierten Pflanzenresten und Erdrückständen zu befreien.

Die Bearbeitung des Bodenareals kann nochmals effizienter zu gestaltet werden, wenn gemäß einer weiteren bevorzugten Ausführungsform ein Zusatztank zum Bereitstellen eines Zusatzmediums, bevorzugt eines Düngemittels und/oder eines Pflanzenschutzmittels, vorgesehen ist. Das Zusatzmedium kann, gesteuert mittels der Steuerung/Regelung, bevorzugt in eine Zuleitung vom Wassertank zu der mindestens einen Düse beigemengt werden oder alternativ mittels zumindest einer eigenen Düse auf den jeweiligen Abschnitt des Bodenareals abgegeben werden.

Gemäß einer besonders bevorzugten weiteren Ausführungsform ist eine Tankabdeckung des Wassertanks und/oder des Zusatztanks in eine geschlossene Position vorgespannt, wobei die Tankabdeckung zum Befüllen des Wassertanks gegen die Vorspannung in eine geöffnete Position bewegbar ist, wobei bevorzugt die Tankabdeckung mittels eines Federelements und/oder eines Magneten in die geschlossene Position vorgespannt ist. Dadurch kann sichergestellt werden, dass das Innere des Wassertanks und/oder Zusatztanks stets von der Umgebung getrennt ist. Für ein Nachfüllen von Wasser beziehungsweise Zusatzmedium kann die Tankabdeckung entgegen der Vorspannung in die geöffnete Position bewegt werden. Dies erfolgt bevorzugt mittels eines durch die Steuerung/Regelung gesteuerten Schiebers oder alternativ mittels eines an einer Dockingstation der selbstfahrenden Bewässerungsvorrichtung ausgebildeten Stutzens.

Um zu verhindern, dass die Abgabe an Wasser und/oder Zusatzmedium aufgrund eines im Wassertank und/oder Zusatztank vorliegenden Unterdrucks oder Überdrucks verfälscht wird, kann der Wassertank und/oder der Zusatztank einen flexiblen Bereich, bevorzugt in Form einer Ausgleichsmembran, und/oder ein Ausgleichventil zum Ausgleichen von Druckunterschieden zwischen dem Inneren des Wassertanks und der Umgebung aufweisen. Alternativ kann der gesamte Wassertank und/oder Zusatztank flexibel ausgebildet sein.

Gemäß einer bevorzugten weiteren Ausführungsform ist zumindest ein Füllstandssensor zum Ermitteln eines Füllstandes im Wassertank und/oder im Zusatztank und/oder im Energiespeicher vorgesehen, wobei die Steuerung/Regelung bevorzugt dazu eingerichtet ist, die selbstfahrende Bewässerungsvorrichtung bei Unterschreiten eines Mindestfüllstands und/oder eines Mindestenergiegehalts an eine Dockingstation zum Auffüllen des Wassertanks und/oder des Zusatztanks und/oder zum Auffüllen des Energiespeichers anzufahren. Dadurch ist sichergestellt, dass die selbstfahrende Bewässerungsvorrichtung nicht während des Betriebs mangels Energie liegen bleibt oder aufgrund eines entleerten Tanks die Bewässerung einstellen muss.

Bevorzugt ist die Steuerung/Regelung ferner dazu eingerichtet, mit einer entsprechend ausgebildeten Dockingstation zu kommunizieren, bevorzugt via WLAN, LORA, NB-Funk, NFC, Radar, optischer Kommunikation und/oder GPS.

Gemäß einer weiteren bevorzugten Ausführungsform ist die Steuerung/Regelung ferner dazu eingerichtet, lokale Klimadaten zu dem Bodenareal von einer externen Informationsquelle zu erhalten und diese bevorzugt in die Ermittlung des Wasserbedarfs des Bodenareals mit einfließen zu lassen.

Gemäß einer weiteren bevorzugten Ausführungsform kann das zu bewässernde Bodenareal der Steuerung/Regelung durch Einprogrammieren vorgegeben sein.

Gemäß einer weiteren bevorzugten Ausführungsform kann ein kulturspezifischer Wasserbedarf der Pflanze, ein gemäß dem Entwicklungsstadium spezifischer Wasserbedarf der Pflanze sowie kulturspezifische Geometrien (Pflanzabstände, Reihenabstände) durch Einprogrammieren vorgegeben werden.

Ferner kann die Steuerung/Regelung dazu eingerichtet sein, ortsbezogen die Messwerte sowie die ermittelten benötigten Wassermenge und/oder die Wasserabgabe zu dokumentieren beziehungsweise zu speichern, so dass diese für eine spätere erneute Bestimmung der benötigen Wassermenge zur Verfügung stehen. Hierdurch kann eine nochmals verbesserte Bestimmung der benötigten Wassermenge erzielt werden.

Gemäß einer weiteren bevorzugten Ausführungsform kann die selbstfahrende Bewässerungsvorrichtung eine weitere Bearbeitungsvorrichtung, bevorzugt eine Vertikutiervorrichtung, aufweisen. Dadurch ist es möglich, das Bodenareal besonders umfangreich zu bearbeiten.

Ferner können ein Regensensor und oder ein Windsensor an der selbstfahrenden Vorrichtung vorgesehen sein und/oder an einem festen Standort aufgestellt mit der Steuerung/Regelung drahtlos in Verbindung stehen.

Weiterhin wird eine Dockingstation für eine selbstfahrende Bewässerungsvorrichtung gemäß einer der vorstehenden Ausführungsformen vorgeschlagen, umfassend eine Speicherauffüllvorrichtung zum Auffüllen des Energiespeichers und eine Wasserzufuhr. Bevorzugt weist die Dockingstation eine Füllvorrichtung zum Auffüllen des Zusatztanks und/oder eine Kommunikationseinheit zur Kommunikation mit der Steuerung/Regelung der selbstfahrenden Bewässerungsvorrichtung auf.

Ferner ist es möglich, die oben gestellte Aufgabe mittels einer Bewässerungsanlage, umfassend zumindest eine selbstfahrende Bewässerungsvorrichtung gemäß einer der vorstehenden Ausführungsformen und zumindest eine Dockingstation gemäß einer der vorstehenden Ausführungsformen, zu lösen.

Die oben gestellte Aufgabe wird weiterhin durch ein Verfahren zum autonomen Bewässern eines Bodenareals mit einer selbstfahrenden Bewässerungseinheit gemäß einer der vorstehenden Ausführungsformen mit den Merkmalen des Anspruchs 13 gelöst. Vorteilhafte Weiterbildungen des Verfahrens ergeben sich aus den Unteransprüchen sowie der vorliegenden Beschreibung und den Figuren.

Entsprechend wird ein Verfahren zum autonomen Bewässern eines Bodenareals mit einer selbstfahrenden Bewässerungseinheit gemäß einer der vorstehenden Ausführungsformen vorgeschlagen, umfassend das Ermitteln eines zu bewässernden Arbeitsbereichs, das Ermitteln einer Lichtintensität auf dem Arbeitsbereich, insbesondere einer Sonneneinstrahlungsintensität, und des Bestimmens einer abzugebenden Wassermenge anhand der erfassten Lichtintensität.

Durch das Verfahren werden die hinsichtlich der Vorrichtung genannten Vorteile und Wirkungen analog erzielt.

Gemäß einer bevorzugten weiteren Ausbildung erfolgt die abzugebende Wassermenge ferner unter Einbeziehung von zumindest einem weiteren Messwert, bevorzugt einem Temperaturwert, Windgeschwindigkeitswert, Niederschlagswert und/oder einer Luftfeuchte und/oder Bodenfeuchte.

Gemäß einer bevorzugten weiteren Ausbildung wird ein Füllstand im Wassertank und/oder im Zusatztank und/oder im Energiespeicher ermittelt, wobei die Steuerung/Regelung bevorzugt dazu eingerichtet ist, die selbstfahrende Bewässerungsvorrichtung bei Unterschreiten eines Mindestfüllstands und/oder eines Mindestenergiegehalts an eine Dockingstation zum Auffüllen des Wassertanks und/oder des Zusatztanks und/oder zum Auffüllen des Energiespeichers anzufahren.

Gemäß einer weiteren bevorzugten Ausbildung wird eingangs ein Vorgabewert bestimmt beziehungsweise in der Steuerung/Regelung gespeichert, welcher angibt, mit wie viel Wasser das Bodenareal beziehungsweise dessen einzelne Abschnitte pro Flächeneinheit und Zeitintervall zu bewässern ist. Bevorzugt wird in einem weiteren Schritt durch die Verwendung von beispielsweise online erhältlichen aktuellen Wetterdaten der aktuelle Wasserbedarf global für das gesamte Bodenareal anhand dieser Wetterdaten bestimmt. Mittels dieser aktuellen Wetterdaten kann ermittelt werden, um welchen Betrag beziehungsweise welche Beträge der oben genannte Vorgabewert beziehungsweise die Vorgabewerte zu verändern sind, um ein optimiertes, bedarfsgerechtes Bewässerungsergebnis zu erzielen. Bei schlechtem Wetter, mithin bei verminderter Verdunstung, kann so die abgegebene Wassermenge pro Flächeneinheit reduziert oder gar ganz unterbrochen werden, sowie an heißen und trockenen Tagen die Wassermenge erhöht werden.

Die vorgenannten Werte können ferner in einem weiteren Schritt durch ein Hinzuziehen von Messwerten eines Lichtsensors und bevorzugt zumindest eines weiteren Sensors weiter angepasst werden. Durch den Lichtsensor sowie bevorzugt den zumindest einen weiteren Sensor, besonders bevorzugt einen Temperatursensor, Windgeschwindigkeitssensor, Niederschlagssensor und/oder einen Luft- und/oder Bodenfeuchtesensor, welche auf der selbstfahrenden Bewässerungsvorrichtung angeordnet sind, können flächenbezogene Daten hyperlokal für jeden Ort beziehungsweise Abschnitts gesammelt werden, welche genauestens die aktuellen Wetterbedingungen abbilden. Anhand dieser Daten kann über die Zeit jede Flächeneinheit des Bodenareals, beispielsweise für jeden Quadratmeter, über verschiedene Tageszeiten und über Jahreszeiten gesehen ein genaues Profil erstellt werden. Dies kann unter anderem in Temperatursummen, Wärmesummen und in Intensität der Sonneneinstrahlung (Watt/m²) gespeichert werden. Schattige Bereiche auf dem Bodenareal können dadurch weniger bewässert werden als sonnige Bereiche. Dies führt zu einer optimalen hyperlokalen Bewässerung aufgrund von Messdaten vor Ort. Jeder Bereich des Rasens bekommt die genau benötigte Wassermenge. Eine Moosbildung in schattigen Bereichen und/oder ein Austrocknen des Bodens in sonnigen Bereichen kann dadurch effektiv vermieden werden.

Bevorzugt wird mittels der erhaltenen Wetterdaten, insbesondere Temperatur, Sonneneinstrahlung, Wind und Niederschlag eine theoretische Evapotranspiration berechnet. Sobald diese Wassermenge wieder dem Boden zugeführt wird ist der Wasserhaushalt ausgeglichen. Auf ein Messen der Bodenfeuchte kann mithin verzichtet werden.

Ferner kann es sinnvoll sein, dass bei ermittelter Wasserknappheit in der Region, in welcher sich das Bodenareal befindet, die selbstfahrende Bewässerungsvorrichtung in einem Sparprogramm zu betreiben, in welchem maximal Wasser gespart wird und bevorzugt lediglich ein Absterben von Pflanzen verhindert wird.

In einer bevorzugten Weiterführung kann die Bedienung, Programmierung und/oder Interaktion mit der Steuerung/Regelung der selbstfahrenden Bewässerungseinheit mittels einer computerimplementierten Applikation beziehungsweise eines Programms erfolgen. Dabei kann die Steuerung/Regelung bevorzugt mit einer externen Vorrichtung, beispielsweise einem PC, einem Tablet Computer oder einem Smartphone, in Kommunikation stehen, beispielsweise via WLAN, Bluetooth oder einem anderen bekannten Verfahren zur Datenübertragung. Ein Nutzer der selbstfahrenden Bewässerungseinheit kann dann in der Applikation Befehle und Vorgaben eingeben, wie beispielsweise die oben genannten Vorgabewerte, sowie die seitens der Sensoren beziehungsweise der Steuerung/Regelung gesammelten Daten ausgelesen.

### Kurze Beschreibung der Figuren

Bevorzugte weitere Ausführungsformen der Erfindung werden durch die nachfolgende Beschreibung der Figuren näher erläutert. Dabei zeigen:
Figur 1 schematisch eine Seitenansicht einer selbstfahrenden Bewässerungsvorrichtung mit einer ihr zugeordneter Dockingstation gemäß einer ersten Ausführungsform;
Figur 2 schematisch eine Seitenansicht einer selbstfahrenden Bewässerungsvorrichtung in einer weiteren Ausführungsform;
Figur 3 schematisch eine Detailansicht eines Wassertanks einer selbstfahrenden Bewässerungsvorrichtung gemäß einer weiteren Ausführungsform;
Figur 4 schematisch den Wassertank aus Figur 3 in einem an die Dockingstation angedockten Zustand der selbstfahrenden Bewässerungseinheit; und
Figur 5 schematisch eine Draufsicht auf ein Bodenareal mit einer selbstfahrenden Bewässerungseinheit.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

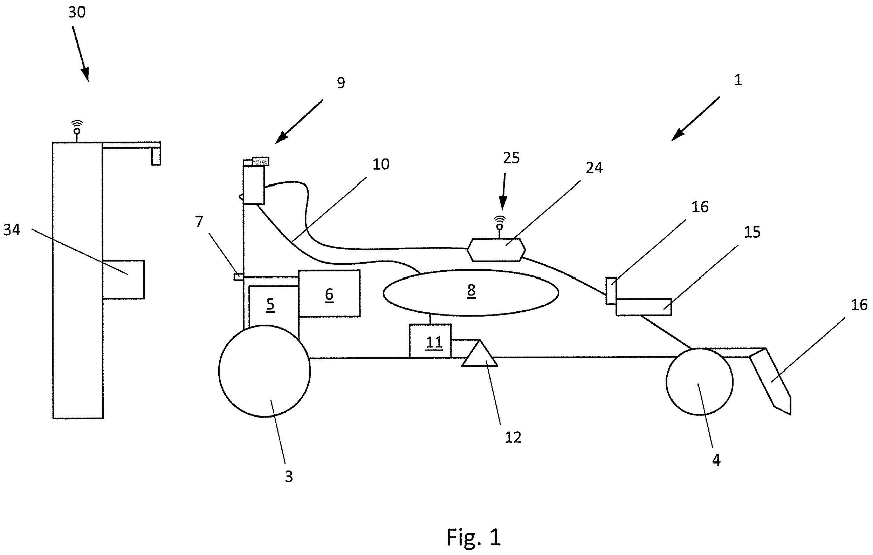

In Figur 1 ist eine Seitenansicht einer selbstfahrenden Bewässerungsvorrichtung 1 zum autonomen Bewässern eines Bodenareals mit einer ihr zugeordneter Dockingstation 30 gemäß einer ersten Ausführungsform gezeigt. Die selbstfahrende Bewässerungsvorrichtung 1 weist ein Chassis 2 auf, an welchem Vorderräder 4 und Hinterräder 3 drehbar gelagert sind, so dass sich ein Fahrzeug ergibt. Die Hinterräder 3 sind über eine Antriebseinheit in Form eines Elektromotors 5 antreibbar. Zur Energieversorgung ist eine Batterie 6 elektrisch leitend mit dem Elektromotor 5 verbunden. Die Batterie 6 kann über am Heck der selbstfahrenden Bewässerungsvorrichtung 1 angeordnete Ladekontakte 7, welche mit entsprechenden Kontakten 34 der Dockingstation 30 in Eingriff bringbar sind, aufgeladen werden.
Die selbstfahrende Bewässerungsvorrichtung 1 weist ferner einen Wassertank 8 auf, welcher ein auf das Bodenareal aufzubringendes Bewässerungsmedium, bevorzugt Wasser oder ein Wassergemisch, speichert. Zum Befüllen des Wassertanks 8 weist dieser eine Tankabdeckung 9 auf. In diesem Fall ist die Tankabdeckung 9 von dem Wassertank 8 mittels einer Tankleitung 10 beabstandet. Alternativ kann die Tankabdeckung 9 aber auch direkt an einem oberen Bereich des Wassertanks 8 angeordnet sein.

Der Wassertank 8 steht mit einer Pumpe 11 in Fluidkommunikation, welche wiederum mit einer Düse 12 zum Ausgeben von Wasser an die Umgebung verbunden ist. Die Düse 12 ist vorliegen in einem unteren Bereich des Chassis 2 seitlich an diesem über ein nicht gezeigtes Kugelgelenk schwenkbar angeordnet.

Die selbstfahrende Bewässerungsvorrichtung 1 umfasst ferner eine Steuerung/Regelung 24 zum Steuern/Regeln der Bewegungen der Bewässerungsvorrichtung 1, mithin des Elektromotors 5, und der Abgabe des Wassers durch die Düse 12.

An der Oberseite des Chassis 2 sind ein Lichtsensor in Form einer Solarzelle 14 sowie ein Temperatursensor 15 angeordnet, welche jeweils mit der Steuerung/Regelung 24 verbunden sind. Mittels der Solarzelle 14 ist es möglich, die Sonneneinstrahlungsintensität zu ermitteln. Die Sonneneinstrahlungsintensität ist hierbei proportional zur durch die Solarzelle 14 erzeugten flächenspezifischen elektrischen Energie beziehungsweise Leistung, welche durch die Steuerung/Regelung 24 erfasst und gespeichert wird. Via des Temperatursensors 15 wird die aktuelle Temperatur in unmittelbarer Nähe zur selbstfahrenden Bewässerungsvorrichtung 1 gemessen.

Ferner ist im vorderen Bereich der selbstfahrenden Bewässerungsvorrichtung 1 bodennah ein mit der Steuerung/Regelung 24 verbundener Bodenfeuchtesensor 16 angeordnet, mittels welchem die Bodenfeuchte gemessen wird.

Die Steuerung/Regelung 24 ist dazu eingerichtet, über eine mit dem Bezugszeichen 25 angedeutete Funkverbindung lokale aktuelle Wetterdaten abzurufen beziehungsweise zu empfangen. Anhand der aktuellen Wetterdaten und der ermittelten Messwerte der Sensoren ermittelt die Steuerung/Regelung 24 eine abzugebende Wassermenge für den Abschnitt des Bodenareals, auf dem sich die selbstfahrende Bewässerungseinheit 1 befindet beziehungsweise welchen sie gerade überquert. Die Berechnung der Befehle zur Steuerung/Regelung kann auch auf einem entfernten Computer (Cloud-Applikation) erfolgen, so dass nur Navigations- und Steuerbefehle sowie Sensordaten zwischen der selbstfahrenden Bewässerungsvorrichtung und der Steuerung/Regelung ausgetauscht werden.

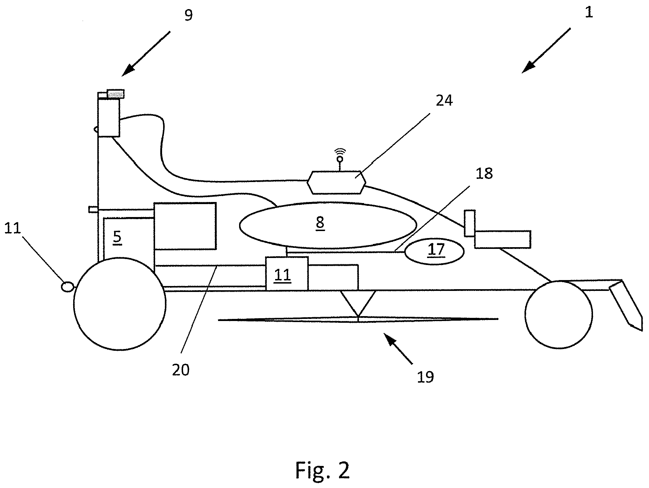

Figur 2 zeigt schematisch eine Seitenansicht einer selbstfahrenden Bewässerungsvorrichtung 1 in einer weiteren Ausführungsform. Die selbstfahrende Bewässerungsvorrichtung 1 aus Figur 2 entspricht im Wesentlichen jener aus Figur 1, wobei die selbstfahrende Bewässerungsvorrichtung 1 aus Figur 2 an ihrer Unterseite zusätzlich eine Mähvorrichtung 19 aufweist, welche, gesteuert mittels der Steuerung/Regelung 24, über einen Antriebsstrang mit dem Elektromotor 5 verbunden ist. Alternativ kann der Mähvorrichtung 19 auch ein separater Antrieb, bevorzugt ein Elektroantrieb oder ein Verbrennungsmotor zugeordnet sein.

Ferner umfasst die selbstfahrende Bewässerungsvorrichtung 1 aus Figur 2 einen Zusatztank 17, in welchem ein flüssiges Düngemittel gespeichert ist. Der Zusatztank 17 ist über eine Einspeisung 18 mit der Leitung zwischen Wassertank 8 und Pumpe 11 verbunden, so dass, gesteuert durch die Steuerung/Regelung 24, bei Bedarf dem zur der Düse gepumpten Wasser Düngemittel zugegeben werden kann. Der Zusatztank weist eine hier nicht gezeigte Tankabdeckung und Tankleitung entsprechend jenen des Wassertanks 8 auf.

Die Düse 18 zum Bewässern ist hier am Heck der selbstfahrenden Bewässerungsvorrichtung 1 angeordnet und als Lochrohr ausgebildet, welches sich über die gesamte Breite der selbstfahrenden Bewässerungsvorrichtung 1 erstreckt.

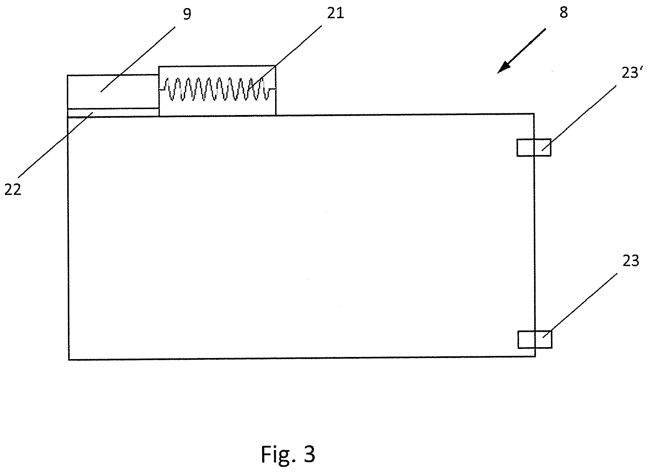

Aus Figur 3 ist schematisch eine Detailansicht eines Wassertanks 8 einer selbstfahrenden Bewässerungsvorrichtung 1 gemäß einer weiteren Ausführungsform zu entnehmen. Am Wassertank 8 sind Füllstandssensoren 23, 23' angeordnet, mittels welchen der Füllstand des Wassertanks 8 detektiert werden kann. Im oberen Bereich des Wassertanks 8 weist dieser eine Tankabdeckung 9 auf, welche im Wesentlichen analog zu jener der Ausführungsformen der Figuren 1 und 2 ausgebildet ist. Die Tankabdeckung 9 ist mittels einer Feder 21 in eine geschlossene Position vorgespannt, wodurch sichergestellt ist, dass das Innere des Wassertanks 8 stets von der Umgebung getrennt ist.

Detektiert der untere Füllstandssensor 23, dass ein Mindestfüllstand des Wassertanks 8 unterschritten wurde, signalisiert er dies an die Steuerung/Regelung 24, welche wiederum veranlasst, dass die selbstfahrende Bewässerungsvorrichtung 1 eine ihr zugeordnete Dockingstation 30 anfährt.

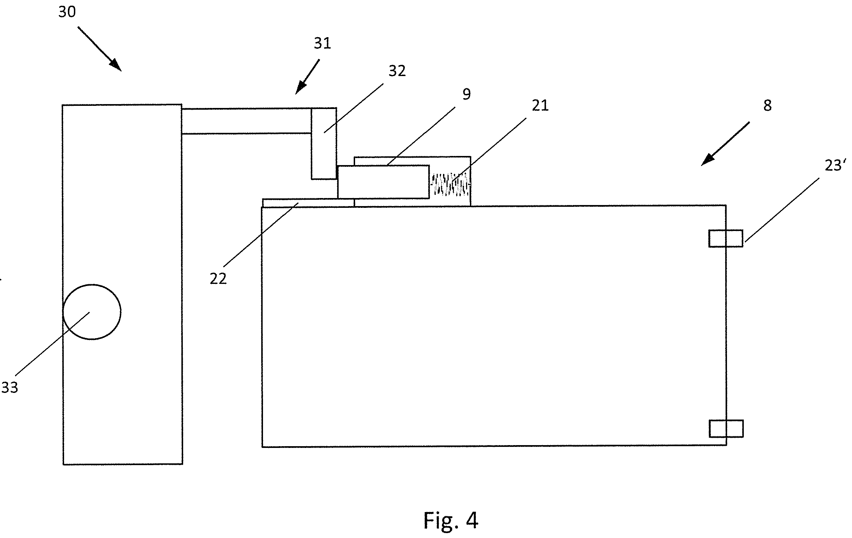

Figur 4 zeigt schematisch den Wassertank 8 aus Figur 3 in einem an die Dockingstation 30 angedockten Zustand der selbstfahrenden Bewässerungseinheit 1. Die Dockingstation 30 weist eine Wasserversorgung 31 mit einem Stutzen 32 auf, welche von einem externen Wasseranschluss 33, beispielsweise einer Trinkwasserleitung, einem Brunnen oder einer Regenwasserzisterne, mit Wasser versorgt wird. Mittels des Stutzens 32 ist die Tankabdeckung 9 gegen die Vorspannung der Feder 21 in eine geöffnete Position verschoben, so dass die Einfüllöffnung 22 geöffnet ist. Erkennt die Steuerung/Regelung 24, dass die selbstfahrende Bewässerungsvorrichtung 1 korrekt angedockt ist und der Stutzen 32 korrekt über der Einfüllöffnung 22 positioniert ist, gibt die Steuerung/Regelung 24 ein Signal an die Dockingstation 30 ab und das Befüllen des Wassertanks 8 beginnt, indem der Stutzen 32 der Wasserversorgung 31 geöffnet wird und ein Freistrahl aus diesem durch die Einfüllöffnung 22 in den Wassertank 8 eintritt. Detektiert der obere Füllstandssensor 23', dass ein maximaler Füllstand erreicht ist, löst die Steuerung/Regelung 24 die Beendigung des Befüllens aus. Alternativ können Beginn und Beendigung des Füllvorgangs auch zumindest teilweise über Schieber und/oder ein Füllstandsrohr erfolgen.

Simultan zum Befüllen des Wassertanks 8 erfolgt ein Aufladen der Batterie 6 sowie analog zum oben beschriebenen Befüllen des Wassertanks 8 gegebenenfalls ein Befüllen des Zusatztanks 17.

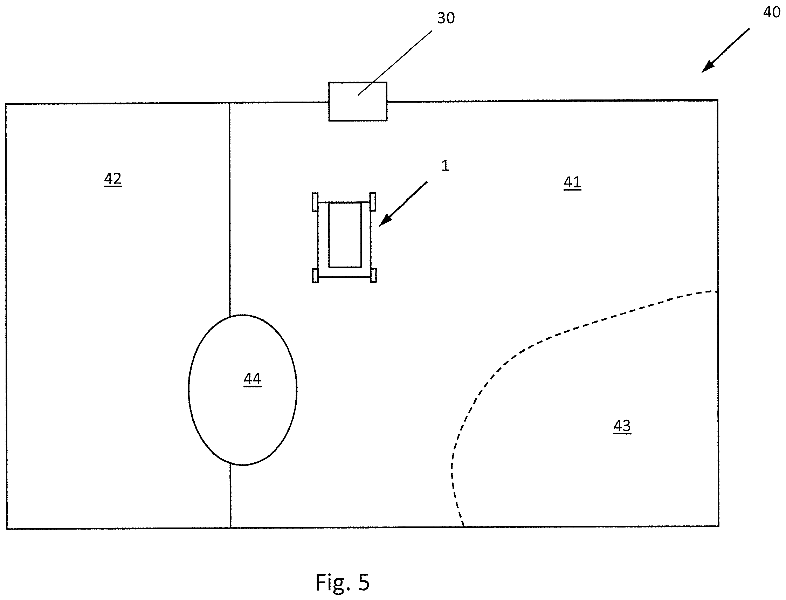

Figur 5 zeigt schematisch eine Draufsicht auf ein Bodenareal 40 mit einer selbstfahrenden Bewässerungseinheit 1 gemäß Figur 2 und einer der selbstfahrenden Bewässerungsvorrichtung 1 zugeordneten Dockingstation. Die Grenzen des Bodenareals 40 sind in einem Speicher der Steuerung/Regelung 24 in Form von GPS-Daten hinterlegt. Das Bodenareal 40 ist ferner in zwei Abschnitte 41, 42 unterteilt. Dem ersten Abschnitt 41 sind eine bestimmte Schnitthöhe, mit welcher die Mähvorrichtung 19 auf dem Abschnitt 41 befindliche Pflanzen zu schneiden hat, sowie eine bestimmte Bewässerungsmenge zugeordnet. Entsprechend sind auch dem zweiten Abschnitt 42 eine entsprechende Schnitthöhe und eine entsprechende Bewässerungsmenge zugeordnet. Der erste Abschnitt 41 kann beispielsweise ein sogenanntes "Grün" eines Golfplatzes sein, der zweite Abschnitt 42 entsprechend ein "Fairway" oder ein "Rough". Alternativ kann der erste Abschnitt 41 beispielsweise ein Rasenbereich eines Gartens und der zweite Abschnitt 42 Blumenbett sein. In letzterem Fall kann in der Steuerung/Regelung 24 hinterlegt sein, dass im zweiten Abschnitt 42 kein Schneiden durch die Mähvorrichtung 42 erfolgen soll. Alternativ oder zusätzlich können auch andere an sich bekannte Methoden zur Eingrenzung und/oder Erkennung des Bodenareals 40 Anwendung finden.

Basierend auf von der Solarzelle 14 der selbstfahrenden Bewässerungsvorrichtung 1 detektierten Werten konnte die Steuerung/Regelung 24 einen Schattenbereich 43 erkennen, welcher vorliegend aufgrund einer Abschattung durch Baumbestand im Vergleich zum übrigen Bereich des ersten Abschnitts 41 über den Tag gesehen eine verminderte Sonneneinstrahlungsintensität erfährt. Für diesen Schattenbereich 43 ist die abzugebende Wassermenge entsprechend der vorbeschriebene Weise reduziert, um einer Moosbildung entgegenzuwirken.

Ferner ist unter dem Bezugszeichen 44 ein Hindernis angedeutet, beispielsweise ein Sandbunker oder ein Teich, welches von der selbstfahrenden Bewässerungsvorrichtung 1 umfahren wird.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Bewässerungsvorrichtung
- 2: Chassis
- 3: H i nterrad
- 4: Vorderrad
- 5: Elektromotor
- 6: Batterie
- 7: Ladekontakt
- 8: Wassertank
- 9: Tankabdeckung
- 10: Tankleitung
- 11: Pumpe
- 12: Düse
- 13: Zuleitung
- 14: Solarzelle
- 15: Temperatursensor
- 16: Bodenfeuchtesensor
- 17: Zusatztank
- 18: Einspeisung
- 19: Mähvorrichtung
- 20: Antriebsstrang
- 21: Feder
- 22: Einfüllöffnung
- 23, 23': Füllstandssensor
- 24: Steuerung
- 25: Funkverbindung

- 30: Dockingstation
- 31: Wasserzufuhr
- 32: Stutzen
- 33: Wasseranschluss
- 34: Kontakt

- 40: Bodenareal
- 41: Erster Abschnitt
- 42: Zweiter Abschnitt
- 43: Schattenbereich
- 44: Hindernis

## Patentansprüche

1. Selbstfahrende Bewässerungsvorrichtung (1) zum autonomen Bewässern eines Bodenareals (40), umfassend ein Mehrzahl von Rädern (3, 4), eine Antriebseinheit zum Antreiben zumindest eines der Räder (3, 4), einen Energiespeicher für die Antriebseinheit, einen Wassertank (8), eine mit dem Wassertank (8) in Fluidkommunikation stehende Pumpe (11), zumindest eine mit der Pumpe (11) verbundene Düse (12) zum Ausgeben von Wasser an die Umgebung und eine Steuerung/Regelung (24) zum Steuern/Regeln der Bewegungen der Bewässerungsvorrichtung (1) und/oder der Abgabe des Wassers,
**dadurch gekennzeichnet, dass**
ein Lichtsensor zum Erfassen einer Lichtintensität, insbesondere einer Sonneneinstrahlungsintensität, vorgesehen ist.

2. Selbstfahrende Bewässerungsvorrichtung (1) gemäß Anspruch 1, **dadurch gekennzeichnet, dass** die Steuerung/Regelung (24) dazu eingerichtet ist, eine abzugebende Wassermenge anhand der via des Lichtsensors erfassten Lichtintensität zu bestimmen.

3. Selbstfahrende Bewässerungsvorrichtung (1) gemäß Anspruch 1 oder 2, **dadurch gekennzeichnet, dass** der Lichtsensor eine Solarzelle (14) ist.

4. Selbstfahrende Bewässerungsvorrichtung (1) gemäß einem der vorstehenden Ansprüche, **dadurch gekennzeichnet, dass** zumindest ein weiterer Sensor, bevorzugt ein Windgeschwindigkeitssensor, Niederschlagssensor, Temperatursensor (15) und/oder ein Feuchtesensor (16) zum Erfassen der Luftfeuchte und/oder der Bodenfeuchte, vorgesehen ist, wobei die Steuerung/Regelung (24) bevorzugt dazu eingerichtet ist, die abzugebende Wassermenge ferner unter Einbeziehung von durch den zumindest einen weiteren Sensor erfassten Messwerten zu bestimmen.

5. Selbstfahrende Bewässerungsvorrichtung (1) gemäß einem der vorstehenden Ansprüche, **dadurch gekennzeichnet, dass** zumindest eine Düse (12) als Lochrohr und/oder als Düse und/oder als rotierende Düse (12) ausgebildet ist.

6. Selbstfahrende Bewässerungsvorrichtung (1) gemäß einem der vorstehenden Ansprüche, **dadurch gekennzeichnet, dass** sie eine Mähvorrichtung (19) aufweist.

7. Selbstfahrende Bewässerungsvorrichtung (1) gemäß Anspruch 8, **dadurch gekennzeichnet, dass** zumindest ein Düse (12) in Hauptfahrtrichtung der selbstfahrenden Bewässerungsvorrichtung (1) gesehen hinter der Mähvorrichtung (19) und/oder zumindest eine Düse (12) seitlich der Mähvorrichtung (19) angeordnet ist.

8. Selbstfahrende Bewässerungsvorrichtung (1) gemäß einem der vorstehenden Ansprüche, **dadurch gekennzeichnet, dass** zumindest eine Düse (12) zum Reinigen der Mähvorrichtung (19) vorgesehen ist, wobei bevorzugt zumindest eine Düse (12) schwenkbar angeordnet ist und bevorzugt zwischen einer Bewässerungsposition und einer Reinigungsposition zum Reinigen der Mähvorrichtung (19) schwenkbar ist.

9. Selbstfahrende Bewässerungsvorrichtung (1) gemäß einem der vorstehenden Ansprüche, **dadurch gekennzeichnet, dass** ein Zusatztank (17) zum Bereitstellen eines Zusatzmediums, bevorzugt eines Düngemittels und/oder eines Pflanzenschutzmittels, vorgesehen ist.

10. Selbstfahrende Bewässerungsvorrichtung (1) gemäß einem der vorstehenden Ansprüche, **dadurch gekennzeichnet, dass** eine Tankabdeckung (9) des Wassertanks (8) und/oder des Zusatztanks (17) in eine geschlossene Position vorgespannt ist, wobei die Tankabdeckung (9) zum Befüllen des Wassertanks (8) gegen die Vorspannung in eine geöffnete Position bewegbar ist, wobei bevorzugt die Tankabdeckung (9) mittels eines Federelements und/oder eines Magneten in die geschlossene Position vorgespannt ist.

11. Selbstfahrende Bewässerungsvorrichtung (1) gemäß einem der vorstehenden Ansprüche, **dadurch gekennzeichnet, dass** der Wassertank (8) und/oder der Zusatztank (17) einen flexiblen Bereich und/oder ein Ausgleichventil zum Ausgleichen von Druckunterschieden zwischen dem Inneren des Wassertanks (8) und der Umgebung aufweist.

12. Selbstfahrende Bewässerungsvorrichtung (1) gemäß einem der vorstehenden Ansprüche, **dadurch gekennzeichnet, dass** zumindest ein Füllstandssensor (23, 23') zum Ermitteln eines Füllstandes im Wassertank (8) und/oder im Zusatztank (17) und/oder im Energiespeicher vorgesehen ist, wobei die Steuerung/Regelung (24) bevorzugt dazu eingerichtet ist, die selbstfahrende Bewässerungsvorrichtung (1) bei Unterschreiten eines Mindestfüllstands und/oder eines Mindestenergiegehalts an eine Dockingstation (39) zum Auffüllen des Wassertanks (8) und/oder des Zusatztanks (17) und/oder zum Auffüllen des Energiespeichers anzufahren.

13. Verfahren zum autonomen Bewässern eines Bodenareals (40) mit einer selbstfahrenden Bewässerungseinheit (1) gemäß einer der vorstehenden Ansprüche, umfassend das Ermitteln eines zu bewässernden Arbeitsbereichs, das Ermitteln einer Lichtintensität auf dem Arbeitsbereich, insbesondere einer Sonneneinstrahlungsintensität, und des Bestimmens einer abzugebenden Wassermenge anhand der erfassten Lichtintensität.

14. Verfahren gemäß Anspruch 13, **dadurch gekennzeichnet, dass** die abzugebende Wassermenge ferner unter Einbeziehung von zumindest einem weiteren Messwert, bevorzugt einem Temperaturwert, Niederschlagswert, Windgeschwindigkeitswert und/oder einer Luftfeuchte und/oder Bodenfeuchte erfolgt.

15. Verfahren gemäß einem der Ansprüche 13 oder 14, **dadurch gekennzeichnet, dass** ein Füllstand im Wassertank (8) und/oder im Zusatztank (17) und/oder im Energiespeicher ermittelt wird, wobei die Steuerung/Regelung (24) bevorzugt dazu eingerichtet ist, die selbstfahrende Bewässerungsvorrichtung (8) bei Unterschreiten eines Mindestfüllstands und/oder eines Mindestenergiegehalts an eine Dockingstation zum Auffüllen des Wassertanks (8) und/oder des Zusatztanks (9) und/oder zum Auffüllen des Energiespeichers anzufahren.
